# EUROPEAN PATENT APPLICATION

(11) **EP 3 467 728 A1**
(43) Date of publication of application: **10.04.2019**
(21) Application number: 18198518.5
(22) Date of filing: 03.10.2018
(51) Int. Cl.: G06Q 10/04, B21D 5/08, G05B 19/418, B21C 47/00

(54) **SYSTEM AND METHOD FOR TRIM LOSS OPTIMIZATION FOR METAL INDUSTRIES**

(30) Priority: 05.10.2017 US 201762568560 P; 20.07.2018 US 201816040904
(71) Applicant: Honeywell International Inc., Morris Plains, NJ New Jersey 07950 (US)
(72) Inventor: ROTHE, Gajanan, Morris Plains, NJ New Jersey 07950 (US); PALANISAMY, Lingathurai, Morris Plains, NJ New Jersey 07950 (US); RAO, Niranjan, Morris Plains, NJ New Jersey 07950 (US); RAMAKRISHNAN, Balamurugan, Morris Plains, NJ New Jersey 07950 (US)
(74) Representative: Houghton, Mark Phillip

(57) **Abstract**

A method for trim loss optimization for metal industries includes receiving (301) a selection of one or more orders for metal trimming. The method also includes inputting (303) the one or more orders and multiple machine parameters to a dimension conversion engine, the dimension conversion engine configured to determine a roll width and a roll length for optimally fulfilling each order using decomposition of a three dimensional problem into a two dimensional problem based on spatial decomposition. The method also includes identifying (309) at least one metal forming or conversion machine for processing the one or more orders. The method also includes inputting (311) one or more metal tolerances as edge trim parameters to a trim algorithm. The method also includes determining (315), using the trim algorithm, a number of parent rolls for fulfilling the one or more orders using the at least one metal forming or conversion machine.

## Description

### TECHNICAL FIELD

This disclosure relates generally to industrial processes in metal industries. More specifically, this disclosure relates to a system and method for trim/cutting loss optimization for metal industries.

### BACKGROUND

Trim planners for metal industries typically focus on effective capacity utilization of different coiling stages, as well as optimizing productivity. Metal industries are very energy-intensive, and recycling costs can also be high.

### SUMMARY

This disclosure provides a system and method for trim loss optimization for metal industries.

In a first embodiment, a method for trim loss optimization for metal industries includes receiving a selection of one or more orders for metal trimming. The method also includes inputting the one or more orders and multiple machine parameters to a dimension conversion engine, the dimension conversion engine configured to determine a roll width and a roll length for optimally fulfilling each order using decomposition of a three dimensional problem into a two dimensional problem based on spatial decomposition. The method also includes identifying at least one metal forming or conversion machine for processing the one or more orders. The method also includes inputting one or more metal tolerances as edge trim parameters to a trim algorithm. The method also includes determining, using the trim algorithm, a number of parent rolls for fulfilling the one or more orders using the at least one metal forming or conversion machine.

In a second embodiment, an apparatus includes at least one processing device configured to: receive a selection of one or more orders for metal trimming; input the one or more orders and multiple machine parameters to a dimension conversion engine, the dimension conversion engine configured to determine a roll width and a roll length for optimally fulfilling each order using decomposition of a three dimensional problem into a two dimensional problem based on spatial decomposition; identify at least one metal forming or conversion machine for processing the one or more orders; input one or more metal tolerances as edge trim parameters to a trim algorithm; and determine, using the trim algorithm, a number of parent rolls for fulfilling the one or more orders using the at least one metal forming or conversion machine.

In a third embodiment, a non-transitory computer readable medium contains instructions that, when executed by at least one processing device, cause the at least one processing device to: receive a selection of one or more orders for metal trimming; input the one or more orders and multiple machine parameters to a dimension conversion engine, the dimension conversion engine configured to determine a roll width and a roll length for optimally fulfilling each order using decomposition of a three dimensional problem into a two dimensional problem based on spatial decomposition; identify at least one metal forming or conversion machine for processing the one or more orders; input one or more metal tolerances as edge trim parameters to a trim algorithm; and determine, using the trim algorithm, a number of parent rolls for fulfilling the one or more orders using the at least one metal forming or conversion machine

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example industrial process control and automation system according to this disclosure;
FIGURE 2 illustrates common steps typically implemented in metal forming processes;
FIGURE 3 illustrates a block diagram showing an example process for trim loss optimization according to this disclosure;
FIGURE 4 illustrates an example of order combinations grouped by thickness for different grades of pipe with the same metal specifications, according to this disclosure;
FIGURE 5 illustrates examples of different spring back factors that can occur during a bending operation; and
FIGURE 6 illustrates an example device for supporting metal trim loss optimization according to this disclosure.

### DETAILED DESCRIPTION

The figures discussed below and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

For simplicity and clarity, some features and components are not explicitly shown in every figure, including those illustrated in connection with other figures. It will be understood that all features illustrated in the figures may be employed in any of the embodiments described in this patent document. Omission of a feature or component from a particular figure is for purposes of simplicity and clarity and is not meant to imply that the feature or component cannot be employed in the embodiment(s) described in connection with that figure.

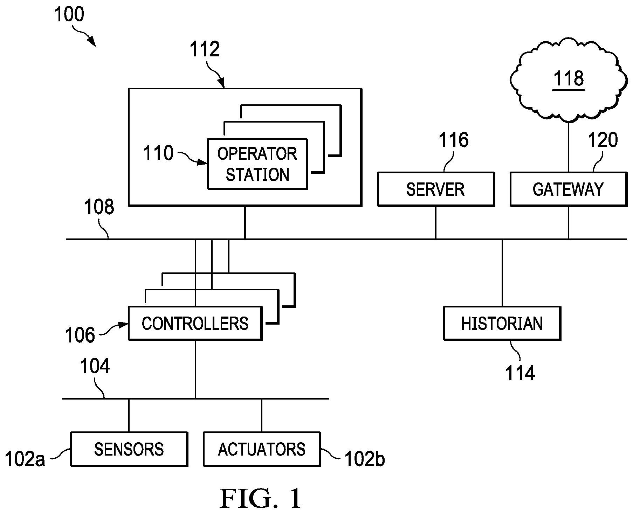

FIGURE 1 illustrates an example industrial process control and automation system 100 according to this disclosure. As shown in FIGURE 1, the system 100 includes various components that facilitate production or processing of at least one product or other material, such as cutting or trimming metal in a metal industry. For instance, the system 100 can be used to facilitate control over components in one or multiple industrial plants. Each plant represents one or more processing facilities (or one or more portions thereof), such as one or more manufacturing facilities for producing at least one product or other material. In general, each plant may implement one or more industrial processes and can individually or collectively be referred to as a process system. A process system generally represents any system or portion thereof configured to process one or more products or other materials in some manner.

In FIGURE 1, the system 100 includes one or more sensors 102a and one or more actuators 102b. The sensors 102a and actuators 102b represent components in a process system that may perform any of a wide variety of functions. For example, the sensors 102a could measure a wide variety of characteristics in the process system, such as flow, pressure, or temperature. Also, the actuators 102b could alter a wide variety of characteristics in the process system, such as actuation of metal trimmers. Each of the sensors 102a includes any suitable structure for measuring one or more characteristics in a process system. Each of the actuators 102b includes any suitable structure for operating on or affecting one or more conditions in a process system.

At least one network 104 is coupled to the sensors 102a and actuators 102b. The network 104 facilitates interaction with the sensors 102a and actuators 102b. For example, the network 104 could transport measurement data from the sensors 102a and provide control signals to the actuators 102b. The network 104 could represent any suitable network or combination of networks. As particular examples, the network 104 could represent at least one Ethernet network (such as one supporting a FOUNDATION FIELDBUS protocol), electrical signal network (such as a HART network), pneumatic control signal network, or any other or additional type(s) of network(s).

The system 100 also includes various controllers 106. The controllers 106 can be used in the system 100 to perform various functions in order to control one or more industrial processes. For example, a first set of controllers 106 may use measurements from one or more sensors 102a to control the operation of one or more actuators 102b. A second set of controllers 106 could be used to optimize the control logic or other operations performed by the first set of controllers. A third set of controllers 106 could be used to perform additional functions. The controllers 106 could therefore support a combination of approaches, such as regulatory control, advanced regulatory control, supervisory control, and advanced process control.

Each controller 106 includes any suitable structure for controlling one or more aspects of an industrial process. At least some of the controllers 106 could, for example, represent proportional-integral-derivative (PID) controllers or multivariable controllers, such as controllers implementing model predictive control (MPC) or other advanced predictive control (APC). As a particular example, each controller 106 could represent a computing device running a real-time operating system, a WINDOWS operating system, or other operating system.

At least one network 108 couples the controllers 106 and other devices in the system 100. The network 108 facilitates the transport of information between components. The network 108 could represent any suitable network or combination of networks. As particular examples, the network 108 could represent at least one Ethernet network.

Operator access to and interaction with the controllers 106 and other components of the system 100 can occur via various operator stations 110. Each operator station 110 could be used to provide information to an operator and receive information from an operator. For example, each operator station 110 could provide information identifying a current state of an industrial process to the operator, such as values of various process variables and warnings, alarms, or other states associated with the industrial process. Each operator station 110 could request information affecting how the industrial process is controlled, such as by requesting setpoints or control modes for process variables controlled by the controllers 106 or other information that alters or affects how the controllers 106 control the industrial process. This could include requesting this information from the controllers 106 or from other devices such as historian 114 or servers 116. In response to such requests, each operator station 110 could receive the requested information. Each operator station 110 includes any suitable structure for displaying information to and interacting with an operator. For example, each operator station 110 could represent a computing device running a WINDOWS operating system or other operating system.

Multiple operator stations 110 can be grouped together and used in one or more control rooms 112. Each control room 112 could include any number of operator stations 110 in any suitable arrangement. In some embodiments, multiple control rooms 112 can be used to control an industrial plant, such as when each control room 112 contains operator consoles 110 used to manage a discrete part of the industrial plant.

The control and automation system 100 here also includes at least one historian 114 and one or more servers 116. The historian 114 represents a component that stores various information about the system 100. The historian 114 could, for instance, store information that is generated by the various controllers 106 during the control of one or more industrial processes. The historian 114 includes any suitable structure for storing and facilitating retrieval of information. Although shown as a single component here, the historian 114 could be located elsewhere in the system 100, or multiple historians could be distributed in different locations in the system 100.

Each server 116 denotes a computing device that executes applications for users of the operator stations 110 or other applications. The applications could be used to support various functions for the operator stations 110, the controllers 106, or other components of the system 100. Each server 116 could represent a computing device running a WINDOWS operating system or other operating system. Note that while shown as being local within the control and automation system 100, the functionality of the server 116 could be remote from the control and automation system 100. For instance, the functionality of the server 116 could be implemented in a computing cloud 118 or a remote server communicatively coupled to the control and automation system 100 via a gateway 120.

In some embodiments, the control and automation system 100 includes, or is part of, a manufacturing system that produces metals or metal products. Manufacturing companies that produce metals typically supply the metals in the form of ingots which are obtained by casting liquid metal into a square cross section. Some examples of ingots include slabs (e.g., 500-1800 mm wide and 50-300 mm thick), billets (e.g., 40 to 150 sq. mm), and blooms (150 to 400 sq. mm). In some systems, continuous casting methods are used to cast the liquid metal into the slabs, billets or blooms. These shapes are further processed, through hot rolling, forging or extrusion, to produce materials in standard forms, such as plates, sheets, rods, tubes and structural sections.

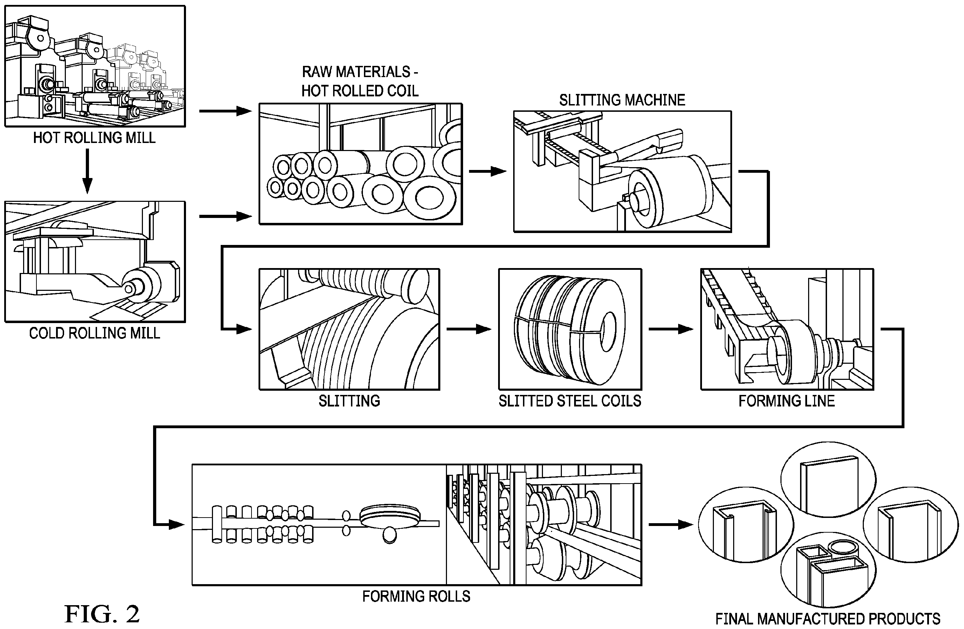

Nearly all major metal products (e.g., tubes, pipes, hollow bars, ship plates, coils, angle bars, I-beams, flat bars, and the like) can be manufactured from flat sheets. Currently, metal trim planners are facing various optimization challenges for interdependent trimming processes, including those with multiple stages. Interdependent stages for coil trimming processes can include metal rolling processes, slitting, secondary slitting, de-coiling, and flat sheet cutting. FIGURE 2 illustrates common steps or stages typically implemented in metal forming processes.

Metal planners are under pressure to reduce converting losses from coils to final products (e.g., pipes, hollow sections, angle bars, and the like). Different types of equipment are used for the conversion from flat sheet to final products. Based on the process involved in the conversion and orders, flat sheet requirements and tolerances are changed. In a metal rolling process, a higher thickness metal sheet (such as aluminum) is converted into a lower thickness sheet with an elongated length. Optimizing this conversion constitutes a three-dimensional conversion problem.

Complexity in cutting and slitting processes has increased over time due to diversified industry applications (e.g., ship building and repair, industrial and steel fabrication, oil and gas applications, construction (including building, infrastructure, and the like), engineering, and major infrastructure applications). In some cases, customers require customized sizes or tailored sizes along with shapes according to specific requirements. Moreover, transportation of metal products, usability, and material handling facilities are creating a major demand for the generation of customized sizes.

Generation of trim solutions is very complex for metal industries due to different requirements at different stages. There is need for integrated solutions for the products. Some metal manufacturing processes consider optimization in only a single dimension (e.g., length only), such as length cutting optimization. Some processes consider optimization in two dimensions (e.g., length and width), such as coiling and de-coiling processes and flat sheet cutting processes. Some processes consider optimization in three dimensions (e.g., length, width, and thickness), such as a rolling process where thickness is converted into length.

To optimize the slitting process, metal industries would benefit from a complete end-to-end solution for parent roll manufacturing in the previous two stages, hot rolling and cold rolling. Such a solution would be helpful in reducing trim losses in the next stages.

To address these and other issues, one or more components of the system 100 could support a mechanism for trim loss optimization for metal industries. For example, this functionality could be implemented in an operator station 110, a server 116, or a computing cloud 118 or remote server. Additional details regarding this functionality are provided below.

Although FIGURE 1 illustrates one example of an industrial process control and automation system 100, various changes may be made to FIGURE 1. For example, the system 100 could include any number of sensors, actuators, controllers, networks, operator stations, control rooms, historians, servers, and other components. Also, the makeup and arrangement of the system 100 in FIGURE 1 is for illustration only. Components could be added, omitted, combined, further subdivided, or placed in any other suitable configuration according to particular needs. Further, particular functions have been described as being performed by particular components of the system 100. This is for illustration only. In general, control and automation systems are highly configurable and can be configured in any suitable manner according to particular needs. In addition, FIGURE 1 illustrates one example operational environment where trim loss optimization can be performed. This functionality can be used in any other suitable system.

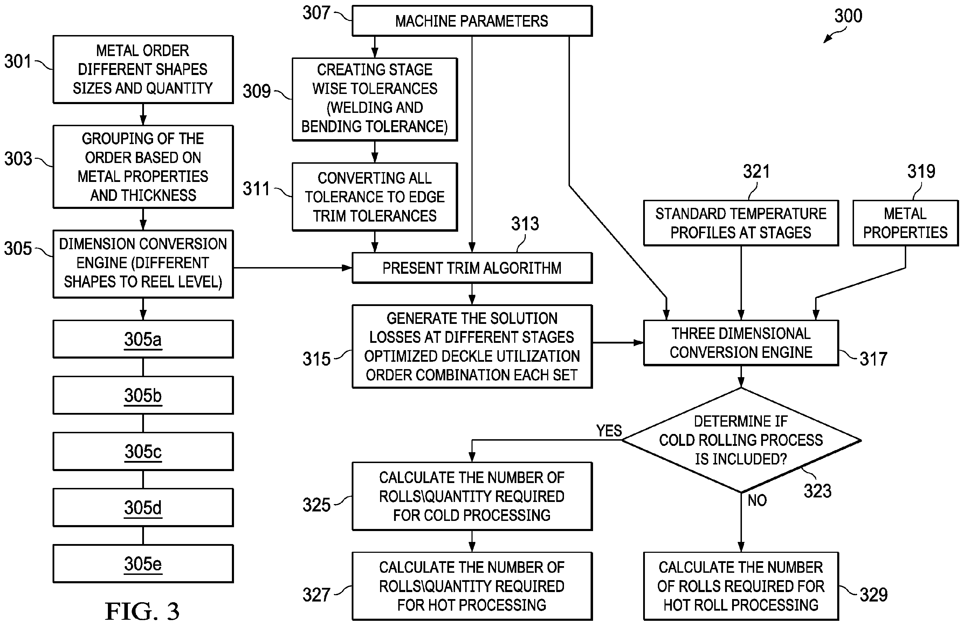

FIGURE 3 illustrates a block diagram showing an example process 300 for trim loss optimization according to this disclosure. The process 300 could, for example, be used for trim loss optimization in a metal forming or metal manufacturing process that includes an industrial process control and automation system, such as the system 100 of FIGURE 1. In some embodiments, the process 300 could be performed by one or more components of the system 100, such as an operator station 110, a server 116, or a computing cloud 118. However, the process 300 could be used with any other suitable system. For ease of explanation, the process 300 will be described as being performed by a computing device.

At step 301, the computing device receives one or more metal orders from a user. This could include the user inputting the order(s) at an operator station. The user can input or select one or more metal orders for processing or manufacturing different sizes, shapes, quantities, and metal composition profiles. The user input may also include one or more conversion routes. Each conversion route indicates one or more pieces of equipment that can convert an initial manufactured product shape to an intermediate product shape (e.g., bloom, slab, or billet) and/or a final product shape (e.g., I-beam, rail, plate, coil, bar, rod, tube, and the like).

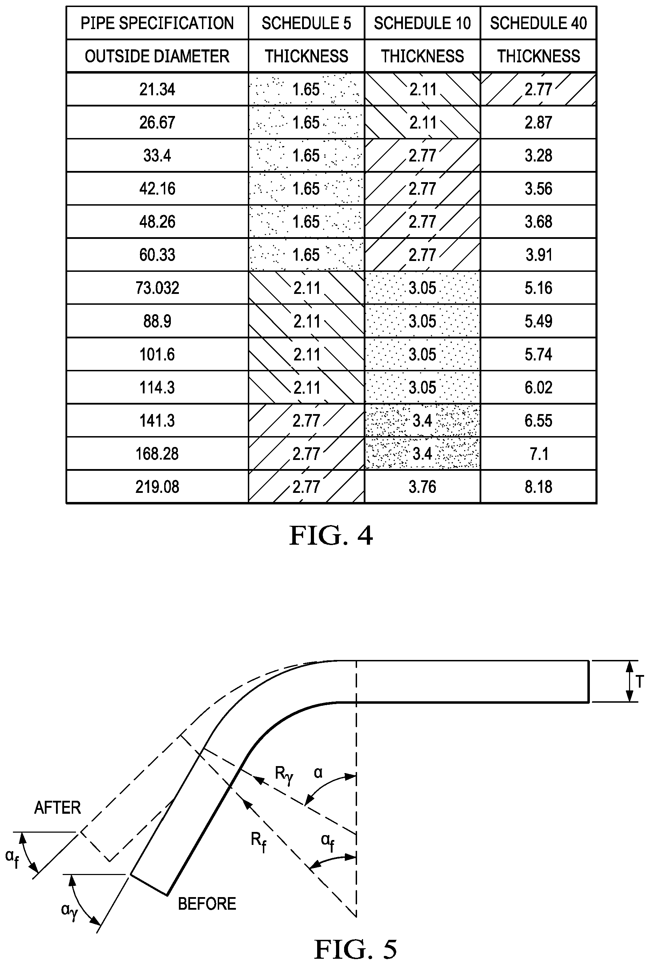

At step 303, the computing device groups or segregates the metal orders based on the metal composition profiles and thickness. That is, metals with the same or similar composition profile or thickness are grouped together, while metals with different composition profiles or thicknesses are placed in different groups. For example, FIGURE 4 illustrates an example of order combinations grouped by thickness for different grades of pipe with the same metal specifications, according to this disclosure. As shown in FIGURE 4, the metals with the same shading (and same number) have the same thickness and can be grouped together in one stock to be processed in one manufacturing process. Once the computing device groups the orders, the orders are then input to a dimension conversion engine executed by the computing device.

At step 305, the dimension conversion engine analyzes the orders and performs a conversion of roll dimensions associated with the orders to generate inputs for a trim algorithm described below in step 313. In particular, the dimension conversion engine determines a roll width and a roll length for fulfilling each order in an optimized way using effective decomposition of a three dimensional problem into a two dimensional problem based on spatial decomposition. In some embodiments, the dimension conversion engine operates using a sequence described below as steps 305a-305e.

At step 305a, the dimension conversion engine converts a quantity of orders into a number of pieces required for the particular shapes and sizes based on a weight-per-meter parameter. A weight-per-meter value is a standard industry value for a density of metal. For example, a pipe customer can be given one or more specifications, such as diameter, length, thickness, metal properties, and quantity (in terms of total weight). The dimension conversion engine converts these based on specification and tolerances to a number of pieces required.

At step 305b, the dimension conversion engine converts one or more three-dimensional shapes represented in the orders into a flat sheet (two dimensions). The number of sheets required for completion of the order is derived from the number of pieces required.

At step 305c, the dimension conversion engine considers the width of each piece along with the width of the roll which will be generated through the trim algorithm.

At step 305d, the dimension conversion engine sums the lengths of all pieces to obtain the length required for the completion of the particular order.

At step 305e, the dimension conversion engine performs the conversion for every order and provides inputs (e.g., length and width) to the trim algorithm.

At step 307, the computing device obtains multiple interdependent conversion or metal forming machine parameters for use as inputs to the trim algorithm. The machine parameters obtained in step 307 can vary depending on the embodiment and the type(s) of orders. In general, key machine parameters that may be input to the trim algorithm include the following:
- Deckle of machine (e.g., maximum deckle and/or minimum deckle)
- Edge trim requirement
- Cutting length
- Number of slitters
- Weight handling details
- Minimum Roll Width
- Maximum Roll Width
- Minimum Diameter
- Maximum Diameters

At step 309, based on a route selected for each order, the computing device determines a conversion or metal forming machine for each order. In making this determination, the computing device considers machine tolerances, welding tolerances, and/or bending and spring back tolerances. Each type of machine (e.g., pipe manufacturer, winder, forming machine, etc.) has its own tolerances and losses. The tolerances are added to width before slitting the parent roll. There are two types of spring back tolerances: positive when elongation occurs, and negative in case of contraction. Depending on the embodiment, the computing device can consider positive spring back, negative spring back, or both. FIGURE 5 illustrates examples of different spring back factors that can occur during a bending operation. In addition, the computing device can determine one or more alternate routes for each product. For example, there can be two or more manufacturing routes for the same product. Each route can include different specifications of machines, where the losses and tolerances are different for the different machines. The alternate routes can be used for effective selection of a route based on losses and availability.

At step 311, the computing device converts all of the tolerances determined in step 309 (e.g., welding tolerance, metal tolerances (positive / negative spring back, overlapping tolerances, and the like) into edge trim parameters for use as inputs in the trim algorithm. This may include the computing device adding all tolerances for each metal forming machine into the width in a particular order during trimming in the trim algorithm. As a particular example, consider a pipe with a diameter *d*. Thus, the material width may be 3.14 x *d*. And the final width to cut on the winder is the material width plus the tolerances.

At step 313, the computing device obtains the output of the dimension conversion engine from step 305, the machine parameters from step 307, and the edge trim parameters from step 311. These are provided as inputs in a two-dimensional format to the trim algorithm.

At step 315, the computing device performs the trim algorithm using the inputs described above. The trim algorithm generates one or more optimized solutions that can include one or more of the following outputs:
- Optimum utilization of deckle
- Minimized trim loss
- Optimum number of set and order combination
- Optimum number of parent rolls required

In some embodiments, the trim algorithm uses linear programming techniques to arrive at the solutions.

At step 317, the computing device uses one or more parent roll requirements for generation of child rolls (as determined by the trim algorithm in step 315) as inputs to a three-dimensional conversion engine for the present planned routes and machine, as well as for other, alternate routes or coiling machines (e.g., a multi-winder). Other inputs, including a type of process (cold or hot rolling), one or more machine parameters (e.g., number of stages) from step 307, one or more metal properties 319, and temperature profile information 321, are also provided to the three-dimensional conversion engine. It is helpful for proper decision making to evaluate route suitability for the set of orders. For example, after trimming, the best route can be evaluated based on trim loss. Using the input parameters provided, the computing device can execute the three dimensional conversion engine to calculate the number of parent rolls required based on thickness. That is, the parent rolls have a greater thickness than the final product.

At step 323, based on the inputs, the computing device determines if only a hot rolling process is to be performed or both hot and cold rolling processes are to be performed. If a hot rolling process followed by a cold rolling process are to be performed, then the process 300 moves to step 325. Otherwise, if only a hot rolling process is to be performed, then the process moves to step 329.

In the case of a hot rolling process followed by a cold rolling process, at step 325, the computing device calculates the number of rolls required for the cold rolling process. This calculation is a higher thickness conversion (e.g., three dimensions) calculation. Then, at step 327, the computing device uses the cold rolling process thickness and the number of parent rolls as inputs for calculating the number of rolls required for the hot rolling process.

Step 329 is performed in the case of only a hot rolling process. At step 329, the computing device calculates the number of rolls required for hot rolling processing. Only stage-wise calculations are carried out for the three-dimensional conversion.

Although FIGURE 3 illustrates one example of a process 300 for trim loss optimization, various changes may be made to FIGURE 3. For example, while shown as a series of steps, various steps shown in FIGURE 3 could overlap, occur in parallel, occur in a different order, or occur multiple times. Moreover, some steps could be combined or removed and additional steps could be added according to particular needs.

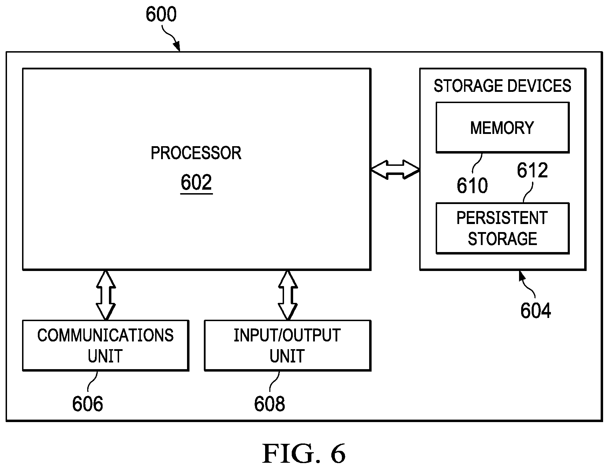

FIGURE 6 illustrates an example device 600 for supporting metal trim loss optimization according to this disclosure. The device 600 could be used, for example, for the process 300 described above with respect to FIGURE 3. In some embodiments, the device 600 could denote an operator station 110, server 116, or device used in the computing cloud 118 described above with respect to FIGURE 1. However, the device 600 could be used in any other suitable system.

As shown in FIGURE 6, the device 600 includes at least one processor 602, at least one storage device 604, at least one communications unit 606, and at least one input/output (I/O) unit 608. Each processor 602 can execute instructions, such as those that may be loaded into a memory 610. The instructions could be associated with a process for metal trim loss optimization. Each processor 602 denotes any suitable processing device, such as one or more microprocessors, microcontrollers, digital signal processors, application specific integrated circuits (ASICs), field programmable gate arrays (FPGAs), or discrete circuitry.

The memory 610 and a persistent storage 612 are examples of storage devices 604, which represent any structure(s) capable of storing and facilitating retrieval of information (such as data, program code, and/or other suitable information on a temporary or permanent basis). The memory 610 may represent a random access memory or any other suitable volatile or non-volatile storage device(s). The persistent storage 612 may contain one or more components or devices supporting longer-term storage of data, such as a read only memory, hard drive, Flash memory, or optical disc.

The communications unit 606 supports communications with other systems or devices. For example, the communications unit 606 could include a network interface card or a wireless transceiver facilitating communications over a wired or wireless network. The communications unit 606 may support communications through any suitable physical or wireless communication link(s).

The I/O unit 608 allows for input and output of data. For example, the I/O unit 208 may provide a connection for user input through a keyboard, mouse, keypad, touchscreen, or other suitable input device. The I/O unit 608 may also send output to a display, printer, or other suitable output device.

Although FIGURE 6 illustrates one example of a device 600 for supporting metal trim loss optimization, various changes may be made to FIGURE 6. For example, components could be added, omitted, combined, further subdivided, or placed in any other suitable configuration according to particular needs. Also, computing devices can come in a wide variety of configurations, and FIGURE 6 does not limit this disclosure to any particular configuration of computing device.

As discussed herein, embodiments of this disclosure provide a system and method capable of the following advantageous technological improvements:
- Effective spatial decomposition of a three-dimensional problem into a two-dimensional problem.
- Optimum clustering of orders (e.g., customer orders, stock orders, and the like) based on thickness and metal composition profiles.
- Generating trimming solutions for any type of shape (e.g., square, C shape, I shape, and the like) formed from at least one metal sheet, strip, or chart during the metal forming process.
- Reducing the overall losses or trim losses during the metal converting (e.g., sheet making and forming) process.
- Correlations between the welding tolerances, spring back bending factor, and the edge trim concept in two-dimensional problem solving.
- Effective handling of multiple stages before and after the coil slitting stage.
- Effective handling of tradeoffs between different objectives.
- Optimal usage of a defect monitoring system. If a defect is in the middle of a roll, the defect monitoring system can detect the defect, then the defective portion can be removed, and the orders can be allocated to the remaining portion of the roll.
- Multi-winder (e.g., coiling machine) support to evaluate minimum losses and effective production planning at different coiling machines.

In addition, the disclosed embodiments provide a system and method that can:
- Be launched through the cloud and which could reduce infrastructure costs.
- Reduce converting losses.
- Reduce recycling costs, which results in reduction of energy costs.
- Improve productivity.
- Optimize losses at coil converting processes.
- Serve customizable orders efficiently.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method comprising:
receiving (301) a selection of one or more orders for metal trimming;
inputting (303) the one or more orders and multiple machine parameters to a dimension conversion engine, the dimension conversion engine configured to determine a roll width and a roll length for optimally fulfilling each order using decomposition of a three dimensional problem into a two dimensional problem based on spatial decomposition;
identifying (309) at least one metal forming or conversion machine for processing the one or more orders;
inputting (311) one or more metal tolerances as edge trim parameters to a trim algorithm; and
determining (315), using the trim algorithm, a number of parent rolls for fulfilling the one or more orders using the at least one metal forming or conversion machine.

2. The method of Claim 1, further comprising:
determining (315), using the trim algorithm, at least one of: an optimum utilization of deckle, a minimized trim loss, an optimum number of set and order combinations.

3. The method of Claim 1, wherein the machine parameters comprise two or more of: a maximum deckle of each machine, an edge trim requirement, a cutting length, a number of slitting machines, one or more weight handling details, a minimum roll width, a maximum roll width, a minimum diameter, and a maximum diameter.

4. The method of Claim 1, further comprising:
determining (323) whether a metal will undergo a cold rolling process or a hot rolling process.

5. The method of Claim 1, further comprising:
performing (303) optimal grouping of the one or more orders based on metal composition profiles and thicknesses.

6. The method of Claim 1, wherein the one or more metal tolerances comprise at least one of or any combination of: a welding tolerance, a positive spring back tolerance, a negative spring back tolerance, and an overlapping tolerance.

7. The method of Claim 1, wherein the one or more orders comprise orders for multiple metal shapes, and the dimension conversion engine is configured to determine the roll width and the roll length for the multiple metal shapes.

8. An apparatus (600) comprising:
at least one processing device (602) configured to:
receive a selection of one or more orders for metal trimming;
input the one or more orders and multiple machine parameters to a dimension conversion engine, the dimension conversion engine configured to determine a roll width and a roll length for optimally fulfilling each order using decomposition of a three dimensional problem into a two dimensional problem based on spatial decomposition;
identify at least one metal forming or conversion machine for processing the one or more orders;
input one or more metal tolerances as edge trim parameters to a trim algorithm; and
determine, using the trim algorithm, a number of parent rolls for fulfilling the one or more orders using the at least one metal forming or conversion machine.

9. The apparatus of Claim 8, wherein the at least one processing device is further configured to determine, using the trim algorithm, at least one of: an optimum utilization of deckle, a minimized trim loss, an optimum number of set and order combinations.

10. The apparatus of Claim 8, wherein the machine parameters comprise two or more of: a maximum deckle of each machine, an edge trim requirement, a cutting length, a number of slitting machines, one or more weight handling details, a minimum roll width, a maximum roll width, a minimum diameter, and a maximum diameter.

11. The apparatus of Claim 8, wherein the at least one processing device is further configured to determine whether a metal will undergo a cold rolling process or a hot rolling process.

12. The apparatus of Claim 8, wherein the at least one processing device is further configured to perform optimal grouping of the one or more orders based on metal composition profiles and thicknesses.

13. The apparatus of Claim 8, wherein the one or more metal tolerances comprise at least one of or any combination of: a welding tolerance, a positive spring back tolerance, a negative spring back tolerance, and an overlapping tolerance.

14. The apparatus of Claim 8, wherein the one or more orders comprise orders for multiple metal shapes, and the dimension conversion engine is configured to determine the roll width and the roll length for the multiple metal shapes.

15. A non-transitory computer readable medium containing instructions that when executed cause at least one processing device to perform the method of any of Claims 1-7.
